# EUROPEAN PATENT SPECIFICATION

(11) **EP 3 013 086 B1**
(45) Date of publication and mention of the grant of the patent: **15.09.2021**
(21) Application number: 15189579.4
(22) Date of filing: 13.10.2015
(51) Int. Cl.: H04W 12/06

(54) **METHOD, APPARATUS AND ELECTRONIC DEVICE FOR CONNECTION MANAGEMENT**
VERFAHREN, VORRICHTUNG UND ELEKTRONISCHE VORRICHTUNG ZUR VERBINDUNGSVERWALTUNG
PROCÉDÉ, APPAREIL ET DISPOSITIF ÉLECTRONIQUE DE GESTION DE CONNEXIONS

(30) Priority: 20.10.2014 CN 201410559632
(43) Date of publication of application: 27.04.2016
(73) Proprietor: Xiaomi Inc., Beijing 100085 (CN)
(72) Inventor: CHEN, Yong, 10085 Beijing (CN); HUANG, Qiuzhi, 10085 Beijing (CN); DONG, Yuquan, 100085 Beijing (CN)
(74) Representative: Studio Torta S.p.A.

(56) References cited:
- CN-A- 101 192 920
- US-A1- 2004 028 000
- US-A1- 2005 249 341
- US-A1- 2008 295 144
- US-B1- 7 643 442

## Description

### TECHNICAL FIELD

The present disclosure generally relates to the field of communication, and more particularly, to a method, an apparatus and an electronic device for connection management.

### BACKGROUND

With the development of network technologies, more and more electronic devices have functions of wireless connection. By joining WIFI (wireless fidelity) networks established by wireless routers, these devices may access the Internet, and access and control each other mutually. Since wireless connection technologies provide convenience for users, some WIFI squatters often join WIFI networks established and maintained by other users for the purpose of saving money.

If WIFI squatters arbitrarily use WIFI networks, wireless resources may be occupied, such that wireless resources available for each device may be decreased, which may influence usage experience of original users. Furthermore, since all devices access to one wireless router, WIFI squatters may illegally access other devices in the same WIFI network, which may even lead to privacy leakage of original users and account safety risk, etc.

Hence, related technologies provide authentication for devices requesting for joining WIFI networks, that is, WIFI squatters are required to input correct access passwords. However, by limited times of trials, WIFI squatters may decode access passwords, such that it may not be efficient to prevent illegal access of WIFI squatters. Patent document US 2004/0028000 relates to the field of wireless networks, and, more particularly, to mobile ad-hoc networks and related methods. Patent document US 20080295144 discloses methods and systems for use in a wireless client that includes one or more wireless network interfaces for communicating with at least one access point wherein the method enables the wireless client to validate the authenticity and integrity of received management frames. Patent document US 7643442 relates to wireless computer networks and, more particularly, to a dynamic Quality-of-Service configuration mechanism for wireless network environments based on transparent processing of session initiation messages transmitted over a wireless medium. Patent document US 2005/0249341 relates to communications systems, and more particularly, to fraud detection in remote access of data services. Patent document CN101192920 discloses a method for replying a request, which is applicable to a CSI service of an IMS service composition in an IP multimedia subsystem of circuit switching.

### SUMMARY

The disclosure provides a method, an apparatus and an electronic device for connection management, to solve a technical problem of illegal access to a wireless network in related technologies. The invention is defined by the appended claims.

The technical solutions provided by the present disclosure may have the following advantages:
By counting a number of times of authentication failure of a device, the present disclosure may accurately recognize "trial" behavior of WIFI squatters for the authentication password, and by performing an operation of risk treatment in time to prevent the WIFI squatters from decoding an authentication password of the wireless network, it is helpful for improving safety of the wireless network.

It is to be understood that both the foregoing general description and the following detailed description are only exemplary and explanatory, and are not intended for limiting the present disclosure.

### BRIEF DESCRIPTION OF THE DRAWINGS

The accompanying drawings, which are incorporated in and constitute a part of the specification, illustrate embodiments consistent with the present disclosure and, together with the description, are intended for explaining the principles of the present disclosure.
Fig. 1 is a flowchart of a method for connection management according to an exemplary embodiment.
Fig. 2 is a diagram for illustrating an application scene of connection management according to an exemplary embodiment.
Fig. 3 is a flowchart of another connection management method according to an exemplary embodiment.
Fig. 4 is a diagram for illustrating another application scene of connection management according to an exemplary embodiment.
Fig. 5 is a flowchart of another connection management method according to an exemplary embodiment.
Fig. 6 is a diagram for illustrating an interface of connection management according to an exemplary embodiment.
Fig. 7 is a block diagram of an apparatus for connection management according to an exemplary embodiment.
Fig. 8 is a block diagram of another apparatus for connection management according to an exemplary embodiment.
Fig. 9 is a block diagram of another apparatus for connection management according to an exemplary embodiment.
Fig. 10 is a block diagram of another apparatus for connection management according to an exemplary embodiment.
Fig. 11 is a block diagram of another apparatus for connection management according to an exemplary embodiment.
Fig. 12 is a block diagram of an apparatus for connection management according to an exemplary embodiment.

### DETAILED DESCRIPTION

Exemplary embodiments, some of which pertaining to the background art, may be described in detail herein, which are illustrated in the accompanying drawings. The following description refers to the accompanying drawings in which the same numbers in different drawings represent the same or similar elements unless otherwise represented. The implementations set forth in the following exemplary embodiments do not represent all implementations in accordance with the present disclosure. Instead, they are merely examples of devices and methods consistent with aspects of the present disclosure as set forth in the appended claims.

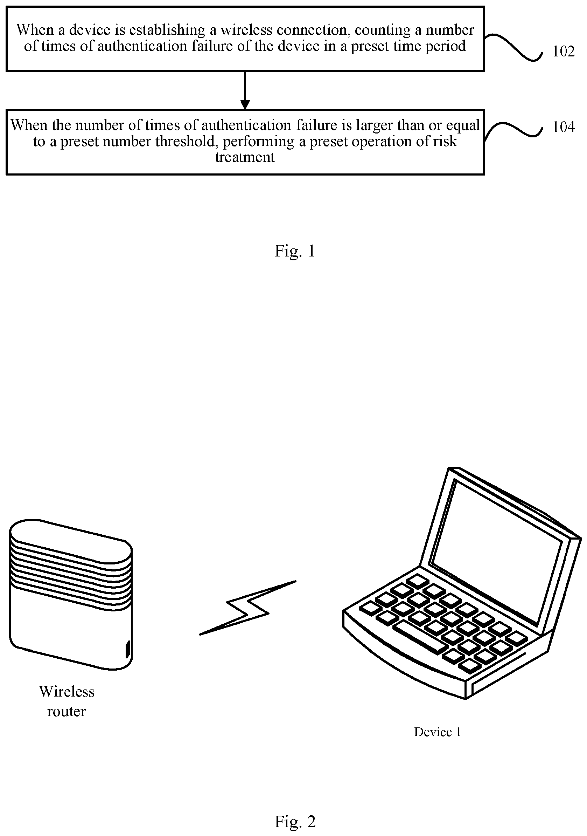

Fig. 1 is a flowchart of a method for connection management of according to an exemplary embodiment. Referring to Fig. 1, the method is applied in a wireless router, including the following steps:

In step 102, when a device is establishing a wireless connection, a number of times of authentication failure of the device in a preset time period is counted.

In the embodiment, when the device is accessing to a wireless network established by the wireless router, the wireless router needs to authenticate the identity of the device, such as judge whether an authentication password input from a user through the device is correct. Hence, "authentication failure" in the present disclosure may be caused by a false authentication password.

In the embodiment, when the device is accessing to the wireless network first time, authentication information such as an authentication password need to be input from the user, wherein, if an authentication is successful, the device may record the current authentication password which may be used for accessing to the same wireless network from then on. Hence, in the circumstance that configuration of the wireless network does not change, the device that has ever connected to the wireless network may not fail in the authentication due to a false authentication password, but only the device that tries to access to the wireless network first time may fail in the authentication due to a false authentication password.

In step 104, when the number of times of authentication failure is larger than or equal to a preset number threshold, a preset operation of risk treatment may be performed.

In the embodiment, when the authentication password is input from the user, the user may know the correct authentication password, which means the user is a normal user. Although the authentication may be failed due to a false input, the user may correct the mistake in time, which may not lead to too many times of authentication failure. On the contrary, if a user does not know the correct authentication password, that is, the user is a WIFI squatter, the user has to try repeatedly to access to the wireless network, which may lead to many times of authentication failure in a short time period. Hence, by monitoring the number of times of authentication failure in a preset time period, an identity of the user may be effectively discriminated, such that a risk of illegal access to the network may be avoided.

In the embodiment, as an exemplary implementation, the operation of risk treatment may include: recording a device that fails in the authentication for many times into a blacklist, so as to refuse it to access to the wireless network. As another exemplary implementation, the operation of risk treatment may include: informing the normal users about identification information of a device that fails in the authentication for many times, thereby the normal user may determine whether to record it into a blacklist, or take other measures.

From the foregoing embodiment, by counting a number of times of authentication failure of a device, the present disclosure may accurately recognize "trial" behavior of WIFI squatters for the authentication password, and by performing an operation of risk treatment in time to prevent the WIFI squatters from decoding an authentication password of the wireless network, it is helpful for improving safety of the wireless network.

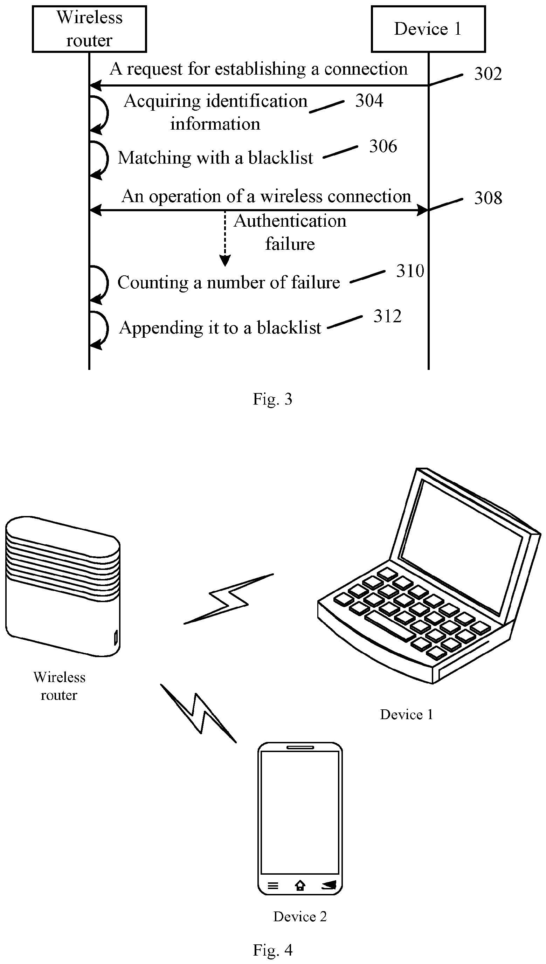

Fig. 2 is a diagram for illustrating an application scene of connection management according to an exemplary embodiment. The application scene as shown in Fig. 2 includes a wireless router and a device that supports wireless functions, such as the device 1. The device 1 initiates a connection request to the wireless router for the purpose of accessing to the wireless network established by the wireless router. Corresponding to the application scene of Fig. 2, Fig. 3 is a flowchart of another connection management method according to an exemplary embodiment, including the following steps:

In step 302, the device 1 initiates a request for establishing a connection to the wireless router.

In the embodiment, the device 1 may be a laptop as shown in Fig. 2, or any other device that may support wireless communication, such as a smart phone, a tablet computer, etc.

In the embodiment, "a request for establishing a connection" is a general description about "a request for establishing a wireless connection", which does not intend to limit interacted messages and a number of times of interaction during the operation.

In step 304, the wireless router acquires identification information of the device 1.

In the embodiment, the identification information may be hardware information of the device 1, such as a MAC (Media Access Control) address, etc., or any other information for distinguishing and identifying different devices.

In the embodiment, the foregoing identification information may be acquired from the request for establishing a connection, transmitted by the device 1. For example, when the identification information is the MAC address of the device 1, the MAC address is an original MAC address of the message from the device 1.

In step 306, the identification information of the device 1 is matched with a preset blacklist.

In step 308, if the identification information of the device 1 is not found in the blacklist, an operation of a wireless connection is performed between the wireless router and the device 1, otherwise, the request for establishing a connection from the device 1 may be ignored, and the wireless router refuses to establish a connection with the device 1.

In step 310, during establishing a wireless connection between the wireless router and the device 1, whether the authentication is successful is obtained, for example, whether the authentication password is correct, and if the authentication is failed, the number of times of authentication failure may be counted.

In step 312, when the number of times of authentication failure in a preset time period is larger than or equal to a preset number threshold, the identification information of the device 1 is appended to the foregoing blacklist, so as to refuse the device 1 to access to the wireless network established by the wireless router.

In the embodiment, only when the user of the device 1 is a WIFI squatter, that is, the user doesn't know the actual authentication password, the WIFI squatter needs to try repeatedly to guess the authentication password, thereby many times of authentication failure events may happen in a short time period, which is obviously distinguished from occasional false inputs of a normal user, so that illegal access behavior and devices may be distinguished from the normal access behavior and devices.

In the embodiment, the preset time period may be set as a default by the manufacturer, or may be set by users, such as 3 minutes.

In the foregoing embodiment, the wireless router may automatically recognize behavior of illegal access to the network by counting authentication failure events in a short time period, and append the device that is illegally accessing to the network to a blacklist, so as to prevent the device from accessing to the wireless network established by the wireless router, thereby the normal usage and high safety of the wireless network may be ensured.

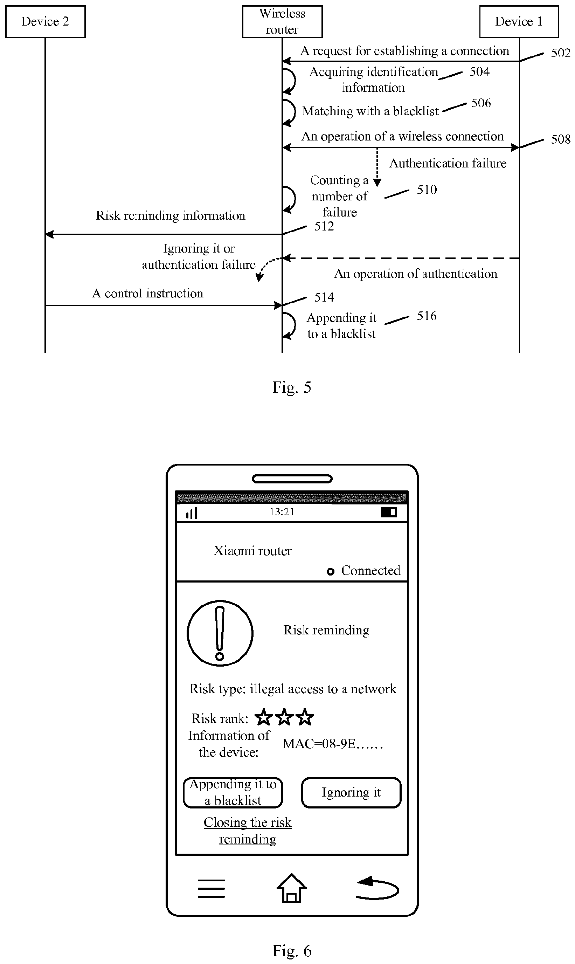

Fig. 4 is a diagram for illustrating another application scene of connection management according to an exemplary embodiment. The application scene as shown in Fig. 4 includes a wireless router and two devices that support wireless functions, such as the device 1 and a device 2. The device 1 initiates a connection request to the wireless router for the purpose of accessing to the wireless network established by the wireless router. The device 2 is a previously-equipped management terminal. Corresponding to the application scene of Fig. 4, Fig. 5 is a flowchart of another connection management method according to an exemplary embodiment, including the following steps:

In step 502, the device 1 initiates a connection request to a wireless router.

In the embodiment, the device 1 may be a laptop as shown in Fig. 4, or any other device that supports wireless communication, such as a smart phone, a tablet computer, etc.

In the embodiment, "a request for establishing a connection" is a general description about "a request for establishing a wireless connection", which does not intend to limit interacted messages and a number of times of interaction during the operation.

In step 504, the wireless router acquires identification information of the device 1.

In the embodiment, identification information may be hardware information of the device 1, such as MAC address etc., or any other information for distinguishing and identifying different devices.

In the embodiment, the foregoing identification information may be acquired from the request for establishing a connection, transmitted by the device 1. For example, when the identification information is the MAC address of the device 1, the MAC address is an original MAC address of the message from the device 1.

In step 506, the identification information of the device 1 is matched with a preset blacklist.

In step 508, if the identification information of the device 1 is not found in the blacklist, an operation of a wireless connection are carried out between the wireless router and the device 1, otherwise, the request from the device 1 for establishing a connection may be ignored, and the wireless router refuses to establish a connection with the device 1.

In step 510, during establishing a wireless connection between the wireless router and the device 1, whether an authentication is successful is obtained, for example, whether an authentication password is correct, and if the authentication is failed, a number of times of authentication failure may be counted.

In step 512, when the number of times of authentication failure in a preset time period is larger than or equal to a preset number threshold, the wireless router may transmit risk reminding information to the device 2.

In the embodiment, as an exemplary implementation, risk reminding information displayed on a screen interface of the device 2 is shown in Fig. 6, such as "risk type", "risk rank" , "device information", etc., which are provided for the user to analyze potential risk condition. When the user determines that the present device (that is the device 1 as shown in Fig. 4) is a device that is illegally accessing to the network, and hopes to prevent it from accessing to the current wireless network, operations such as "appending it to the blacklist", or "ignoring it" may be selected.

In the embodiment, as an exemplary implementation, the device 2 may be located in the wireless network established by the wireless router, thereby the device 2 may exchange information with the wireless router based on the wireless network. As another exemplary implementation, the device 2 may be located out of the wireless network established by the wireless router, thereby the device 2 and the wireless router may access to the Internet respectively, and exchange information based on the Internet, such that the user of the device 2 may control the family wireless network remotely, for example, manage the family wireless network remotely during working in a company.

In step 514, the wireless router receives control instructions from the device 2.

In the embodiment, between step 510 and step 514, that is, in a period after the wireless router detects a risk of illegal access to the network, of the device 1, and before the wireless router receives a returned control instruction, the operation of the authentication with regard to the device 1 may be paused, so as to prevent the device 1 from decoding the authentication password of the wireless router during this period; alternatively, all authentication results with regard to the device 1 are set as authentication failure, so as to prevent the device 1 from accessing to the wireless network.

In step 516, if the control instruction returned from the device 2 corresponds to "appending it to a blacklist", the wireless router appends the identification information of the device 1 to the foregoing blacklist; alternatively, if the control instruction returned from the device 2 corresponds to "ignoring it", the wireless router may resume the normal operation of the authentication with regard to the device 1.

In the foregoing embodiment, by counting authentication failure events in a short time, the wireless router may automatically recognize behavior of illegal access to the network; and by combining with simple interaction operations of the user, the wireless router may determine whether to append the "suspected device that is illegally accessing to the network" to a blacklist, thereby the normal usage and high safety of the wireless network may be ensured, and misjudgments about a normal device may be avoided at the same time.

Additionally, in the embodiments as shown in Fig. 3 and Fig. 5, for any device appended to the blacklist, if the user determines it is a misjudgment, the user may log in the wireless router and cancel a record of this device in the blacklist, so as to recover the misjudged "device that is illegally accessing to the network" to "a normal device".

Corresponding to the foregoing embodiments of methods, the present disclosure also provides embodiments of an apparatus for connection management.

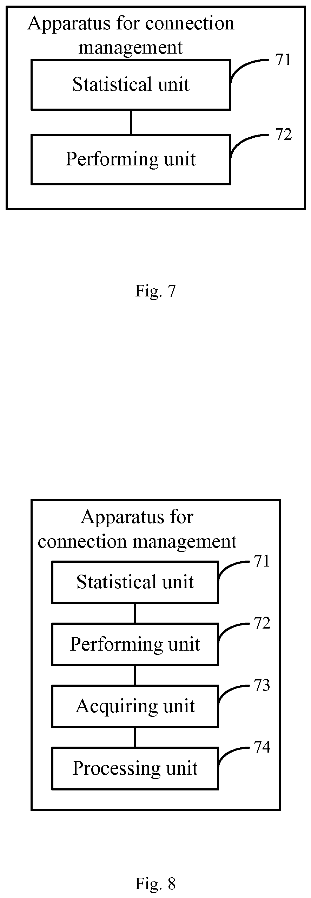

Fig. 7 is a block diagram of an apparatus for connection management according to an exemplary embodiment. Referring to Fig. 7, the apparatus includes a statistical unit 71 and a performing unit 72.

Wherein the statistical unit 71 is configured to count a number of times of authentication failure of a device in a preset time period when the device is establishing a connection.

The performing unit 72 is configured to perform a preset operation of risk treatment when the number of times of authentication failure is larger than or equal to a preset number threshold.

From the foregoing embodiment, by counting a number of times of authentication failure of a device, the present disclosure may accurately recognize "trial" behavior of WIFI squatters for an authentication password, and by performing an operation of risk treatment in time to prevent the WIFI squatters from decoding the authentication password of the wireless network, it is helpful for improving safety of the wireless network.

As shown in Fig. 8, Fig. 8 is a block diagram of another apparatus for connection management according to an exemplary embodiment. Based on the embodiment as shown in Fig. 7, the apparatus further includes: an acquiring unit 73 and a processing unit 74.

Wherein the acquiring unit 73 is configured to acquire identification information of the device when the apparatus receives a request for establishing a connection transmitted by the device.

The processing unit 74 is configured to ignore the request for establishing a connection in the circumstance that the identification information exists in a preset blacklist, otherwise, perform an operation of a wireless connection with the device.

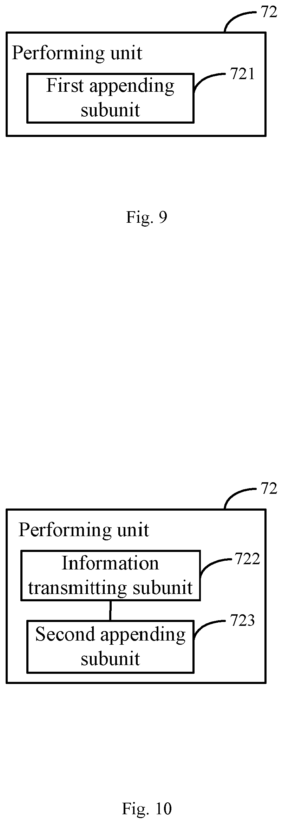

As shown in Fig. 9, Fig. 9 is a block diagram of another apparatus for connection management according to an exemplary embodiment. Based on the embodiment as shown in Fig. 8, the performing unit 72 may include: a first appending subunit 721.

Wherein the first appending subunit 721 is configured to append the identification information to the blacklist.

Fig. 10 is a block diagram of another apparatus for connection management according to an exemplary embodiment. Based on the embodiment as shown in Fig. 8, the performing unit 72 may include: an information transmitting subunit 722 and a second appending subunit 721.

Wherein the information transmitting subunit 722 is configured to transmit risk reminding information to a preset management terminal,

The second appending subunit 721 is configured to append the identification information to the blacklist, according to a control instruction returned from the management terminal.

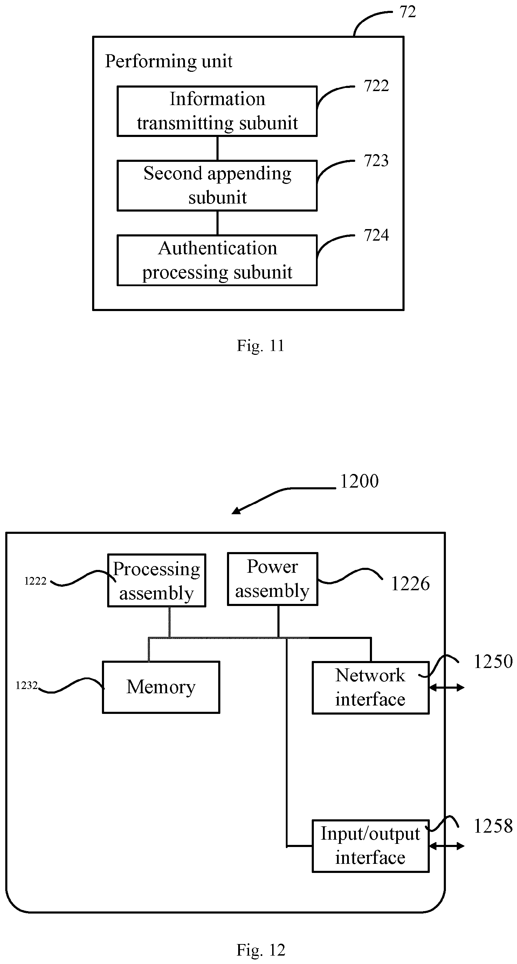

Fig. 11 is a block diagram of another apparatus for connection management according to an exemplary embodiment. Based on the embodiment as shown in Fig. 10, the performing unit 72 may include: an authentication processing subunit 724.

Wherein the authentication processing subunit 724 is configured to, after the risk reminding information is transmitted and before the control instruction is received, pause an operation of authentication with regard to the device, or, set all authentication results with regard to the device as authentication failure.

As for the apparatuses in the foregoing embodiments, operation implementations of each module have been described in detailed in related embodiments of the method, which are not illustrated in detail repeatedly.

Since the apparatus embodiments generally correspond to the method embodiments, the apparatus embodiments may make reference to related portions of the method embodiments. The above-described embodiments about the apparatus are just illustrative, wherein units described as separate components may be physically separate or not, and components shown as units may be physical units or not, that is, may be located in one location, or located in a plurality of network units. The purpose of the present disclosure may be achieved by a part of or all of the modules according to practice, which may be understood and implemented by the skilled in the art without paying inventive labor.

Correspondingly, the present disclosure further provides an apparatus for connection management, including: a processor; and a memory for storing instructions executable by the processor, wherein the processor is configured to: when a device is establishing a wireless connection, count a number of times of authentication failure of the device in a preset time period, and when the number of times of authentication failure is larger than or equal to a preset number threshold, perform a preset operation of risk treatment.

Correspondingly, the present disclosure further provides a terminal, including: a memory; and one or more program, wherein the one or more program is stored in the memory, and configured to be executed by one or more processor, and the one or more program includes instructions for following operations: when a device is establishing a wireless connection, a number of times of authentication failure of the device in a preset time period is counted, and when the number of times of authentication failure is larger than or equal to a preset number threshold, an operation of risk treatment is performed.

Fig. 12 is a block diagram of an apparatus 1200 for connection management according to an exemplary embodiment. For example, the apparatus 1200 may be provided as a wireless router, or as a smart terminal with functions of a wireless router. Referring to Fig. 12, the apparatus 1200 includes: a processing assembly 1222 that further includes one or processor; and storing resource represented by a memory 1232 that is adapted to store instructions executable by the processing assembly 1222, such as an application program. The application program stored in the memory 1232 may include one or more module, each of which corresponds to a group of instructions. Additionally, the processing assembly 1222 is configured to execute instructions for implementing the foregoing connection management method.

The apparatus 1200 may further include: a power assembly 1226 configured to implement power management of the apparatus 1200; a wire or wireless network interface 1250 configured to connect the apparatus 1200 with a network; and an input/output (I/O) interface 1258. The apparatus 1200 may run an operating system stored in the memory 1232, for example, Windows Server TM, Mac OS X TM, Unix TM, Linux TM, FreeBSD TM or the like.

It is intended that the scope of the present disclosure only be limited by the appended claims.

## Claims

1. A method for a wireless router to perform connection management comprising:
when a device (1) is establishing a wireless connection with the wireless router, counting (102), by the wireless router, a number of times of authentication failure of the device (1) in a preset time period;
when the number of times of authentication failure is larger than or equal to a preset number threshold, performing (104), by the wireless router, a preset operation of risk treatment which includes the steps of:
transmitting (512), by the wireless router, risk reminding information to a preset management terminal (2);
depending on a control instruction returned from the management terminal (2), either appending (516), by the wireless router, identification information of the device to a preset blacklist or not; and
after transmitting (512) the risk reminding information and before receiving (514) the control instruction returned from the management terminal (2), setting all authentication results with regard to the device as authentication failure.

2. The method according to claim 1, **characterized in that**, the method further comprises:
when a request for establishing a connection transmitted by the device is received, acquiring (304) the identification information of the device; and
if the identification information exists in the preset blacklist, ignoring (308) the request for establishing a connection, otherwise, performing an operation of a wireless connection with the device.

3. An apparatus for performing connection management, comprising:
a statistical unit (71) configured to, when a device (1) is establishing a wireless connection with the apparatus, count a number of times of authentication failure in a preset time period;
a performing unit (72) configured to, when the number of times of authentication failure is larger than or equal to a preset number threshold, perform a preset operation of risk treatment,
**characterized in that** the performing unit includes:
an information transmitting subunit (722), configured to transmit risk reminding information to a preset management terminal (2),
an appending subunit (723) configured to, depending on a control instruction returned from the management terminal (2), either append identification information of the device to a preset blacklist or not, and
an authentication processing subunit (724) configured to, after the risk reminding information is transmitted and before the control instruction returned from the management terminal (2) is received, set all authentication results with regard to the device as authentication failure.

4. The apparatus according to claim 3, **characterized in that**, the apparatus further comprises:
an acquiring unit (73), configured to, when a request for establishing a connection transmitted by the device is received, acquire the identification information of the device; and
a processing unit (74), configured to, if the identification information exists in the preset blacklist, ignore the request for establishing a connection, otherwise, perform an operation of a wireless connection with the device.

5. An electronic device for performing connection management, **characterized by** comprising:
a processor (1222); and
a memory (1232) for storing instructions executable by the processor,
wherein the processor is configured to:
when a device (1) is establishing a wireless connection with the electronic device, count (102) a number of times of authentication failure in a preset time period, and
when the number of times of authentication failure is larger than or equal to a preset number threshold, perform (104) a preset operation of risk treatment which includes the steps of:
transmitting (512) risk reminding information to a preset management terminal (2);
depending on a control instruction returned from the management terminal (2), either appending (516) identification information of the device to a preset blacklist or not;
after transmitting (512) the risk reminding information and before receiving (514) the control instruction returned from the management terminal (2), setting all authentication results with regard to the device as authentication failure.

6. A computer program which, when executing on a processor of a wireless router for performing connection management, performs the steps of the method according to any one of claims 1-2.

## Patentansprüche

1. Verfahren für einen drahtlosen Router zur Durchführung von Verbindungsverwaltung, umfassend:
wenn eine Vorrichtung (1) eine drahtlose Verbindung mit dem drahtlosen Router aufbaut, Zählen (102), durch den drahtlosen Router, einer Anzahl von Malen eines Authentifizierungsfehlers der Vorrichtung (1) während einer voreingestellten Zeitperiode;
wenn die Anzahl von Malen eines Authentifizierungsfehlers größer oder gleich einem voreingestellten Zahlenschwellenwert ist, Durchführen (104), durch den drahtlosen Router, einer voreingestellten Operation der Risikobehandlung, welche die Schritte umfasst von:
Übertragen (512), durch den drahtlosen Router, von Risikoerinnerungsinformationen an ein voreingestelltes Verwaltungsterminal (2);
abhängig von einer vom Verwaltungsterminal (2) zurückgesendeten Steueranweisung, entweder Anfügen (516), durch den drahtlosen Router, von Identifikationsinformationen der Vorrichtung an eine voreingestellte schwarze Liste oder nicht; und
nach dem Übertragen (512) der Risikoerinnerungsinformationen und vor dem Empfangen (514) der Steueranweisung, die von dem Verwaltungsterminal (2) zurückgesendet wird, Einstellen aller Authentifizierungsergebnisse in Bezug auf die Vorrichtung als Authentifizierungsfehler.

2. Verfahren nach Anspruch 1, **dadurch gekennzeichnet, dass** das Verfahren weiter umfasst:
wenn eine von der Vorrichtung übertragene Anforderung zum Aufbau einer Verbindung empfangen wird, Erfassen (304) der Identifikationsinformationen der Vorrichtung; und
falls die Identifikationsinformationen in der voreingestellten schwarzen Liste vorhanden sind, Ignorieren (308) der Anforderung zum Aufbau einer Verbindung, andernfalls Durchführen einer Operation einer drahtlosen Verbindung mit der Vorrichtung.

3. Einrichtung zum Durchführen einer Verbindungsverwaltung, umfassend:
eine statistische Einheit (71), die so konfiguriert ist, dass sie, wenn eine Vorrichtung (1) eine drahtlose Verbindung mit der Einrichtung aufbaut, eine Anzahl von Malen eines Authentifizierungsfehlers während einer voreingestellten Zeitperiode zählt;
eine Durchführungseinheit (72), die so konfiguriert ist, dass sie, wenn die Anzahl von Malen eines Authentifizierungsfehlers größer als oder gleich einem voreingestellten Zahlenschwellenwert ist, eine voreingestellte Operation der Risikobehandlung durchführt,
**dadurch gekennzeichnet, dass** die Durchführungseinheit Folgendes einschließt:
eine Informationsübertragungs-Untereinheit (722), die so konfiguriert ist, dass sie Risikoerinnerungsinformationen an ein voreingestelltes Verwaltungsterminal (2) überträgt,
eine Anfüge-Untereinheit (723), die so konfiguriert ist, dass sie in Abhängigkeit von einer von dem Verwaltungsterminal (2) zurückgesendeten Steueranweisung entweder Identifikationsinformationen der Vorrichtung an eine voreingestellte schwarze Liste anfügt oder nicht, und
eine Authentifizierungsverarbeitungsuntereinheit (724), die so konfiguriert ist, dass sie nach dem Übertragen der Risikoerinnerungsinformationen und vor dem Empfangen der vom Verwaltungsterminal (2) zurückgesendeten Steueranweisung alle Authentifizierungsergebnisse in Bezug auf die Vorrichtung als Authentifizierungsfehler einstellt.

4. Vorrichtung nach Anspruch 3, **dadurch gekennzeichnet, dass** die Einrichtung weiter umfasst:
eine Erfassungseinheit (73), die so konfiguriert ist, dass sie, wenn eine von der Vorrichtung übertragene Anforderung zum Aufbau einer Verbindung empfangen wird, die Identifikationsinformationen der Vorrichtung erfasst; und
eine Verarbeitungseinheit (74), die so konfiguriert ist, dass sie, falls die Identifizierungsinformationen in der voreingestellten schwarzen Liste vorhanden sind, die Anforderung zum Aufbau einer Verbindung ignoriert, andernfalls eine Operation einer drahtlosen Verbindung mit der Vorrichtung durchführt.

5. Elektronische Vorrichtung zur Durchführung von Verbindungsverwaltung, **dadurch gekennzeichnet, dass** sie Folgendes umfasst:
einen Prozessor (1222); und
einen Speicher (1232) zum Speichern von Anweisungen, die durch den Prozessor ausführbar sind,
wobei der Prozessor konfiguriert ist, um:
wenn eine Vorrichtung (1) eine drahtlose Verbindung mit der elektronischen Vorrichtung aufbaut, eine Anzahl von Malen eines Authentifizierungsfehlers während einer voreingestellten Zeitperiode zählt (102), und
wenn die Anzahl von Malen eines Authentifizierungsfehlers größer oder gleich einem voreingestellten Zahlenschwellenwert ist, eine voreingestellte Operation der Risikobehandlung durchführt (104), welche die Schritte umfasst von:
Übertragen (512) von Risikoerinnerungsinformationen an ein voreingestelltes Verwaltungsterminal (2);
abhängig von einer vom Verwaltungsterminal (2) zurückgesendeten Steueranweisung, entweder Anfügen (516) von Identifikationsinformationen der Vorrichtung an eine voreingestellte schwarze Liste oder nicht;
nach dem Übertragen (512) der Risikoerinnerungsinformationen und vor dem Empfangen (514) der Steueranweisung, die von dem Verwaltungsterminal (2) zurückgesendet wird, Einstellen aller Authentifizierungsergebnisse in Bezug auf die Vorrichtung als Authentifizierungsfehler.

6. Computerprogramm, das bei Ausführung auf einem Prozessor eines drahtlosen Routers zur Durchführung der Verbindungsverwaltung die Schritte des Verfahrens nach einem der Ansprüche 1 bis 2 durchführt.

## Revendications

1. Procédé permettant à un routeur sans fil d'effectuer une gestion de connexions comprenant les étapes consistant à :
lorsqu'un dispositif (1) établit une connexion sans fil avec le routeur sans fil, compter (102), par l'intermédiaire du routeur sans fil, un nombre de temps d'échecs d'authentification du dispositif (1) dans une période de temps prédéfinie ;
lorsque le nombre de temps d'échecs d'authentification est supérieur ou égal à un seuil de nombre prédéfini, effectuer (104), par l'intermédiaire du routeur sans fil, une opération prédéfinie de traitement de risque qui inclut les étapes consistant à :
transmettre (512), par l'intermédiaire du routeur sans fil, des informations de rappel de risque à un terminal de gestion prédéfini (2) ;
en fonction d'une instruction de commande renvoyée par le terminal de gestion (2), ajouter (516), par l'intermédiaire du routeur sans fil, des informations d'identification du dispositif à une liste noire préréglée ou non ; et
après la transmission (512) des informations de rappel de risque et avant une réception (514) de l'instruction de commande renvoyée par le terminal de gestion (2), définir tous les résultats d'authentification par rapport au dispositif en tant qu'échec d'authentification.

2. Procédé selon la revendication 1, **caractérisé en ce que** le procédé comprend en outre les étapes consistant à :
lorsqu'une demande d'établissement d'une connexion transmise par le dispositif est reçue, acquérir (304) les informations d'identification du dispositif ; et
si les informations d'identification existent dans la liste noire prédéfinie, ignorer (308) la demande d'établissement d'une connexion, sinon, effectuer une opération d'une connexion sans fil avec le dispositif.

3. Appareil pour effectuer une gestion de connexions, comprenant :
une unité statistique (71) configurée pour, lorsqu'un dispositif (1) établit une connexion sans fil avec l'appareil, compter un certain nombre de temps d'échecs d'authentification dans une période de temps prédéfinie ;
une unité d'exécution (72) configurée pour, lorsque le nombre de temps d'échecs d'authentification est supérieur ou égal à un seuil de nombre prédéfini, exécuter une opération prédéfinie de traitement de risque, **caractérisé en ce que** l'unité d'exécution inclut :
une sous-unité de transmission d'informations (722), configurée pour transmettre des informations de rappel de risque à un terminal de gestion prédéfini (2),
une sous-unité d'ajout (723) configurée pour, en fonction d'une instruction de commande renvoyée par le terminal de gestion (2), ajouter des informations d'identification du dispositif à une liste noire préréglée ou non, et
une sous-unité de traitement d'authentification (724) configurée pour, après la transmission des informations de rappel de risque et avant la réception de l'instruction de commande renvoyée par le terminal de gestion (2), définir tous les résultats d'authentification par rapport au dispositif en tant qu'échec d'authentification.

4. Appareil selon la revendication 3, **caractérisé en ce que** l'appareil comprend en outre :
une unité d'acquisition (73), configurée pour, lorsqu'une demande d'établissement d'une connexion transmise par le dispositif est reçue, acquérir les informations d'identification du dispositif; et
une unité de traitement (74), configurée pour, si les informations d'identification existent dans la liste noire prédéfinie, ignorer la demande d'établissement d'une connexion, sinon, effectuer une opération d'une connexion sans fil avec le dispositif.

5. Dispositif électronique pour effectuer une gestion de connexions, **caractérisé en ce qu'**il comprend :
un processeur (1222) ; et
une mémoire (1232) pour stocker des instructions exécutables par le processeur,
dans lequel le processeur est configuré pour :
lorsqu'un dispositif (1) établit une connexion sans fil avec le dispositif électronique, compter (102) un nombre de temps d'échecs d'authentification dans une période de temps prédéfinie, et
lorsque le nombre de temps d'échecs d'authentification est supérieur ou égal à un seuil de nombre prédéfini, effectuer (104) une opération prédéfinie de traitement de risque qui inclut les étapes consistant à :
transmettre (512) des informations de rappel de risque à un terminal de gestion prédéfini (2) ;
en fonction d'une instruction de commande renvoyée par le terminal de gestion (2), ajouter (516) des informations d'identification du dispositif à une liste noire prédéfinie ou non ;
après transmission (512) des informations de rappel de risque et avant réception (514) de l'instruction de commande renvoyée par le terminal de gestion (2), définir tous les résultats d'authentification par rapport au dispositif en tant qu'échec d'authentification.

6. Programme informatique qui, lorsqu'il est exécuté sur un processeur d'un routeur sans fil pour exécuter une gestion de connexions, effectue les étapes du procédé selon l'une quelconque des revendications 1 ou 2
